# EUROPÄISCHE PATENTANMELDUNG

(11) **EP 1 858 142 A1**
(43) Veröffentlichungstag der Anmeldung: **21.11.2007**
(21) Anmeldenummer: 07009559.1
(22) Anmeldetag: 12.05.2007
(51) Int. Cl.: H02K 41/03

(54) **Linearmotor**

(30) Priorität: 16.05.2006 DE 102006022773
(71) Anmelder: Technische Universität Kaiserlautern, 67663 Kaiserslautern (DE)
(72) Erfinder: Huth, Gerhard, Prof.Dr.-Ing., 97618 Leutershausen (DE); Greilach, Peter, Dr.-Ing., 67661 Kaiserslautern (DE)
(74) Vertreter: Becker, Bernd

(57) **Zusammenfassung**

Ein Linearmotor (1) weist ein Sekundärteil (2) mit Permanentmagneten (4) und ein bewegbares Primärteil (5) mit stromdurchflossener mehrphasiger Wicklung auf. Zur Erhöhung der erzielbaren Antriebskräfte sind die Permanentmagnete (4) derart angeordnet, das ihre Nord (N)- und Südpole (S) in Bewegungsrichtung hintereinander angeordnet sind und die Spulen der mehrphasigen Wicklung die Permanentmagnete (4) umgreifen.

## Beschreibung

Die Erfindung bezieht sich auf einen Linearmotor mit einem Sekundärteil mit Permanentmagneten und einem bewegbaren Primärteil mit stromdurchflossener mehrphasiger Wicklung.

Zum Beispiel in der Verfahrenstechnik sowie bei der automatisierten Herstellung verschiedener Produkte finden elektrische Stellantriebe eine zunehmende Verbreitung. Mit derartigen Stellantrieben kann ein Objekt an einer gewünschten Stelle positioniert und/oder ausgerichtet werden. Konventionell drehende elektrische Servomotoren treiben dabei über ein Getriebe oder direkt eine Kugelrollspindel an. Weiterhin bekannt sind elektrische Synchronlinearmotoren, die Linearachsen direkt antreiben und daher eine möglichst gleichmäßige und störungsfreie Kraftentfaltung aufweisen müssen.

Diese permanenterregten Linearantriebe verfügen über ein Sekundärteil mit Permanentmagneten, deren Nord- und Südpole abwechselnd jeweils senkrecht zur Bewegungsrichtung eines Primärteils angeordnet sind. Das Primärteil, auch Kurzstator genannt, ist üblicherweise aus ferromagnetischen Blechen aufgebaut, in deren Nuten meist eine dreiphasige Wicklung angeordnet ist. Dabei muss ein Führungswagen zur Bewegung des Primärteils im Verhältnis zur Antriebskraft große Anzugskräfte aufnehmen. Es ist auch bekannt, das Primärteil ohne ferromagnetische Materialien auszuführen, um eine geringe Masse zu erhalten und Rastkräfte infolge von Randeffekten sowie der Nutung zu vermeiden. Die Größe der Kraft, die von einem solchen Linearmotor aufgebracht werden kann, ist proportional zu dem Vektorprodukt des Strombelags und des Magnetfelds.

Aus der DE 101 54 791 A1 ist ein Rotationsantrieb mit einer Erregerspule bekannt, bei der aufgrund ihres Aufbaus und der unipolaren Anordnung die Induktionswirkung im Inneren der Erregerspule stattfindet. Ein Linearantrieb ist damit nicht realisierbar.

Die EP 0 422 539 B1 beschreibt ebenfalls einen Rotationsantrieb mit einem Rotor und einem Stator, wobei seitlich über dem Rotor vorstehende Spulenabschnitte annähernd rechtwinklig abgebogen sind. Somit wird ein hoher Wirkungsgrad erreicht. Ein Linearantrieb ist jedoch nicht möglich.

Im Weiteren offenbart die EP 0 858 965 B1 einen Linearmotor mit eisenlosen Wicklungen, die zwischen einander gegenüberliegenden Permanentmagnetreihen angeordnet sind. Sonach sind die Wicklungen beidseitig von Permanentmagneten umgeben und der Wirkungsgrad ist erhöht. Allerdings sind hierzu mehrere Magnetspuren notwendig.

Weiterhin ist der US 6,812,619 B2 ein Elektromotor mit einem Rotor und einem Stator mit eisenlosen Wicklungen zu entnehmen, die aber über den Umfang des Rotors hinausreichen, so dass eine platzsparende Bauweise nicht möglich ist.

Schließlich zeigt die US 2002/0079997 A1 einen eisenlosen Linearmotor, der aufgrund seiner beiden Magnetspuren ebenfalls einen erheblichen Platzbedarf aufweist.

Es ist Aufgabe der Erfindung, einen Linearmotor der eingangs genannten Art anzugeben, der bei einem kompakten Aufbau dennoch eine erhöhte Kraftdichte zur Erzielung großer Stellkräfte aufweist.

Erfindungsgemäß wird die Aufgabe dadurch gelöst, dass die Permanentmagnete derart angeordnet sind, dass ihre Nord- und Südpole in Bewegungsrichtung hintereinander angeordnet sind und die Spulen der mehrphasigen Wicklung die Permanentmagnete umgreifen.

Ein Gedanke der Erfindung besteht darin, die Permanentmagnete im Innenraum der Spulen der mehrphasigen Wicklung, nachfolgend auch Wicklungsspulen genannt, anzuordnen, wodurch sie infolge der Spulenbestromung in die Wicklungsspulen hineingezogen oder herausgedrückt werden. Sind die Permanentmagnete fixiert, werden dementsprechend die Wicklungsspulen entlang der Permanentmagnete bewegt. Dabei kann die Formgebung der Wicklungsspulen im Rahmen der Erfindung an sich beliebig gewählt werden, bevorzugt jedoch wie im Folgenden beschrieben. Die Permanentmagnete sind dabei insbesondere derart in Bewegungsrichtung angeordnet, dass die Nord- oder Südpole jeweils zweier benachbarter Permanentmagnete zueinander hin weisen. Somit verfügt der Linearmotor nur über eine Magnetspur und kann daher trotz größerer Kraftentfaltung einen kompakteren Aufbau aufweisen.

Selbstverständlich muss zur Erreichung einer hohen Kraftdichte der Abstand zwischen den Wicklungsspulen und den Permanentmagneten möglichst klein gehalten werden. Weiterhin werden die Wicklungsspulen derart umgepolt, dass jeweils ein Dauermagnet hineingezogen wird und am Todpunkt, d.h. wenn sich ihre Zug- und Druckkräfte auf den Dauermagneten gegeneinander aufheben, das Magnetfeld nunmehr in die andere Richtung weist, um den Dauermagneten quasi wieder aus der Spule herauszudrücken.

Der Vorteil der Erfindung liegt darin, dass eine mit einem derart ausgebildeten Linearmotor erzeugbare Antriebskraft bei gleicher Stromstärke in der Wicklung bzw. einem gleich starken Magnetfeld um mindestens den Faktor zwei größer ist als bei herkömmlichen Elektromotoren.

Vorzugsweise ist der Linearmotor eisenlos ausgeführt, um Rastmomente infolge von Randeffekten und dergleichen zu vermeiden. Natürlich wird in diesem Fall den Wicklungsspulen mit anderen nicht ferromagnetischen Materialien die gewünschte Form verliehen.

Damit der Motor aus jeder beliebigen Lage selbst anlaufen kann, sind mindestens zwei Wicklungsphasen erforderlich, die jeweils in einer solchen Länge und in einem solchen Abstand, in Bewegungsrichtung gesehen, hintereinander angeordnet sind, dass die Abstände zwischen benachbarten Permanentmagneten jeweils überbrückt werden können, wodurch aufgrund der mit den Wicklungsspulen erzeugten magnetischen Felder jeweils in Zusammenwirkung mit den Permanentmagneten ausreichende Zug- bzw. Druckkräfte erzeugt werden. Insbesondere sind die Spulen kreuzungsfrei angeordnet, was deren Aufbau vereinfacht. Vorzugsweise werden drei Wicklungsphasen hintereinander angeordnet, die in an sich bekannter Weise dreiphasig angesteuert werden. Diese Wicklungsausführung bewirkt eine verhältnismäßig hohe Kraftdichte.

Insbesondere ist es möglich, bei dem Linearmotor phasenreine Wicklungen zu verwenden, deren Spulenbreite variiert werden kann. Die Maschine als Motor kann in jeder Position anlaufen und im Dauerbetrieb eine nahezu konstantes Drehmoment bzw. eine nahezu konstante Kraft unabhängig von der relativen Lage der Primärspulen zu den Dauermagneten liefern. Bei einer Mehrphasenwicklung wird ein wanderndes Magnetfeld in Röhrenform erzeugt und die Kraftwirkung ist so gerichtet, dass der bewegliche Teil die Position einnimmt, bei der die Flussverkettung der Wicklung mit den Permanentmagneten und damit die magnetische Energie maximal wird. Durch die Verteilung der Wicklungsstränge können, wie bei den konventionellen Bruchlochwicklungen, unerwünschte Nebeneffekte unterdrückt werden, in dem die Ströme der Mehrphasenwicklung keine oder nur sehr schwach störende Oberfelder erzeugen.

Zur Ausgestaltung des Querschnitts des Linearmotors, in Bewegungsrichtung gesehen, sind zweckmäßigerweise die Wicklungsspulen im Wesentlichen rund oder rechteckig ausgebildet. Selbstverständlich sind dementsprechend die Permanentmagnete ebenfalls rund oder rechteckig ausgebildet. Dabei umgreifen die Wicklungsspulen die Permanentmagnete im Wesentlichen vollständig. Ein durchgehend umlaufendes Umgreifen ist nicht möglich, da die Permanentmagnete selbst noch auf einem Untergrund abgestützt sein müssen. Bei einer runden Ausführung kann lediglich ein offener Schlitz verbleiben, bei einer rechteckigen Ausführung bleibt eine Kante des Rechtecks frei. Im Übrigen können aber auch alle anderen Formgebungen gewählt werden, beispielsweise oval oder trapezfömig.

Vorzugsweise ist der Linearamotor als Normalkraft-Aktor ausgebildet und benötigt nur ein Sekundärteil, eine Magnetspur. Grundsätzlich lassen sich elektromagnetische Aktoren in zwei Gruppen, nämlich die Normalkraft-Aktoren und die Schubkraft-Aktoren einteilen. Bei Normalkraft-Aktoren wird dominierend die in Richtung der Magnetfeldlinien wirkende Kraft senkrecht zur Spulenfläche, also die Normalkraft, als Antriebskraft genutzt. Normalkraft-Aktoren sind damit prinzipbedingt eisenlose Aktoren. Damit Normalkraft-Aktoren wirkungsvoll funktionieren, muss der Abstand zwischen Spule und durchdringenden Dauermagnet senkrecht zur Bewegungsrichtung möglichst klein sein, die radiale Ausdehnung der Spule in der Schnittfläche senkrecht zur Bewegungsrichtung gering gehalten werden und die Spule sollte den durchdringenden Magneten möglichst vollständig umfassen. Dahingegen erfolgt bei Schubkraft-Aktoren die Bewegung durch eine senkrecht zu den Magnetfeldlinien wirkende Kraft. Bei diesem Wirkungsprinzip werden die Wicklungen in die Nuten von ferromagnetischen Aktivteilen eingelegt, um den Bedarf an Erregerdurchflutung gering zu halten. Nach diesem Wirkungsprinzip, bei dem ferromagnetische Aktivteile, in der Regel in geblechter Form, zum Einsatz kommen, arbeiten alle konventionellen elektromagnetischen Energiewandler. Die bei Schubkraft-Aktoren auch auftretenden Normalkräfte in Richtung der Magnetfeldlinien können technisch nicht genutzt werden. Sie führen lediglich zu parasitären Effekten, wie Schwingungen und Geräuschen.

Prinzipiell ist es möglich, den Linearmotor auch als drehenden Servomotor auszubilden. In diesem Fall sind die hintereinander angeordneten Permanentmagnete als Kreisring zu einer Magnetschiene angeordnet und die Wicklungsspulen umgreifen diese Magnetschiene und laufen kreisförmig um. Dabei können die Wicklungsspulen, in Draufsicht gesehen, radial nach außen oder innen weisen.

Vorstehend sind insbesondere dreisträngige Wicklungssysteme für Normalkraft-Aktoren beschrieben, die aus kreuzungsfreien Spulenanordnungen bestehen und keine Begrenzung der Verstellbewegung verursachen. Sie eignen sich damit grundsätzlich für unbegrenzte Linear- und Drehbewegungsapplikationen. Die Wicklungssysteme mit ihren speziellen Spulenanordnungen unterliegen einer Wicklungssystematik, die bei Unterstellung eines symmetrischen Aufbaus eine Analogiebetrachtung zu Drehstrom-Bruchlochwicklungen in der speziellen Ausführungsform als Zahnspulenwicklung ermöglicht.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand zweier Ausführungsbeispiele unter Bezugnahme auf die zugehörigen Zeichnungen näher erläutert. Es zeigt:
- Fig. 1: eine perspektivische Explosionsdarstellung eines Teiles des erfindungsgemäßen Linearmotors,
- Fig. 2: einen Querschnitt durch den Linearmotor nach Fig. 1
- Fig. 3: einen Querschnitt einer alternativen Ausführung des Linearmotors,
- Fig. 4: eine Darstellung einer Abwicklung eines Primärteils eines Linearmotors nach dem Stand der Technik,
- Fig. 5: eine Darstellung einer Magnetspur des Linearmotors nach Fig. 4,
- Fig. 6: eine Darstellung einer Abwicklung eines Primärteils des Linearmotors nach Fig. 1 und
- Fig. 7: eine Darstellung einer Magnetspur des Linearmotors nach Fig. 6.

Der Linearmotor 1 umfasst ein Sekundärteil 2 und ein gemäß Doppelpfeil R relativ dazu bewegbares Primärteil 5. Das Sekundärteil 2 besteht im Wesentlichen aus einer Stützschiene 3 zur Abstützung von Permanentmagneten 4, die in Richtung des Doppelpfeils R derart hintereinander angeordnet sind, dass die Südpole S bzw. Nordpole N zweier benachbarter Permanentmagnete 4 jeweils aufeinander zu weisen. Magnetische Materialien für die Permanentmagnete 4 mit ausreichenden Feldstärken sind im Stand der Technik bekannt.

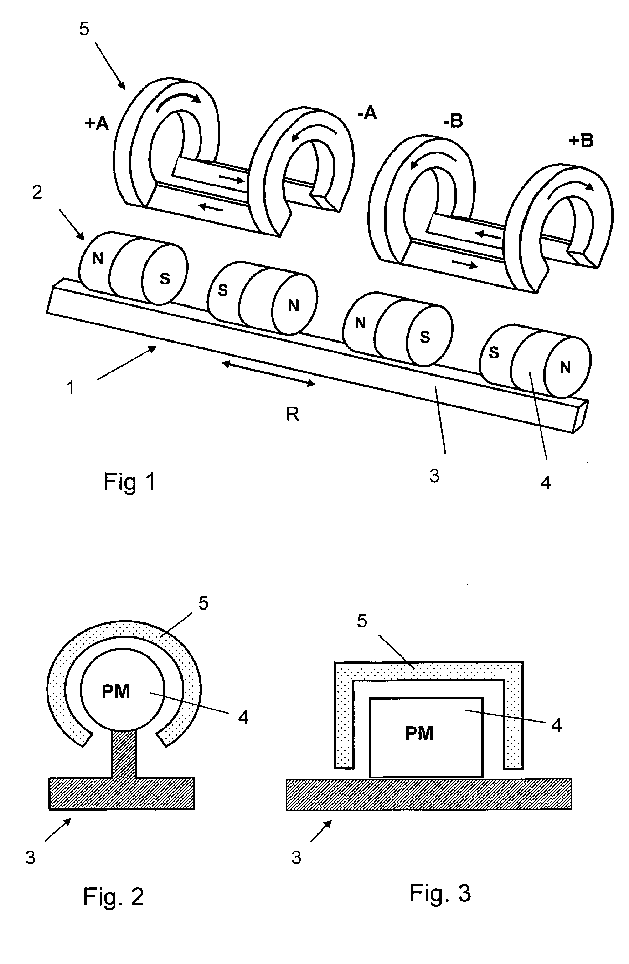

Die Wicklungsspulen sowie die Permanentmagnete 4 nach Fig. 2 Die Wicklungsspulen sowie die Permanentmagnete 4 nach Fig. 2 weisen einen runden Querschnitt auf, wobei in den Wicklungsspulen lediglich ein Schlitz offen bleibt, um das Hindurchgreifen der Stützschiene 3, auf der die Permanentmagnete 4 abgestützt sind, zu ermöglichen.

Bei dem Linearmotor nach Fig. 3 sind die Wicklungsspulen im Querschnitt rechteckig ausgebildet und ebenfalls rechteckige Permanentmagnete 4 stützen sich auf einer flächig ausgebildeten Stützschiene 3 ab, wobei lediglich eine Art Unterkante der Wicklungsspulen offen bleibt. Der Abstand zwischen den Wicklungsspulen sowie den Permanentmagneten 4 ist so gering wie möglich, um möglichst hohe Feldstärken bzw. Antriebskräfte zu erzielen.

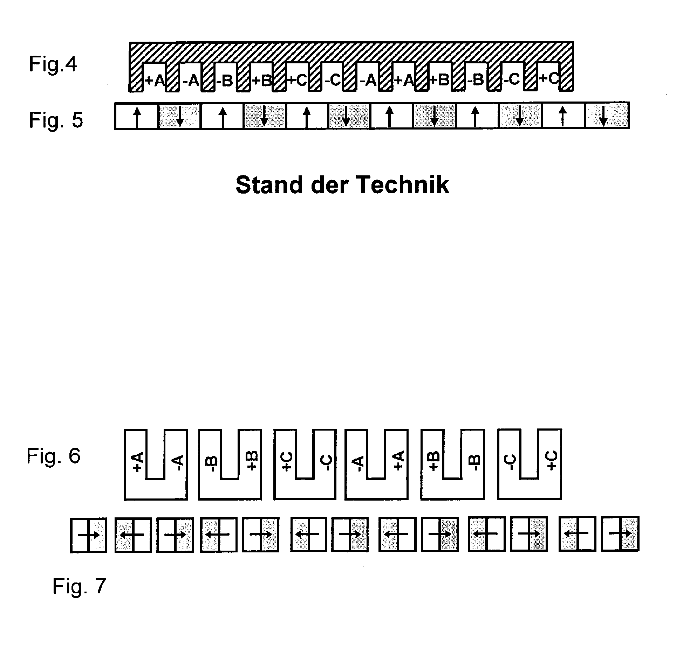

Gemäß den Fig. 4 bis 7 sind drei Wicklungsphasen hintereinander angeordnet, die in an sich bekannter Weise dreiphasig angesteuert werden. Die grundsätzliche Wicklungsverteilung lässt sich aus der Einschicht-Bruchlochwicklung in Zahnspulenausführung ableiten. Die zehn-polige Anordnung mit dreiphasiger Wicklung besteht aus 6 Wicklungsspulen.

## Patentansprüche

1. Linearmotor mit einem Sekundärteil (2) mit Permanentmagneten (4) und einem bewegbaren Primärteil (5) mit stromdurchflossener mehrphasiger Wicklung, **dadurch gekennzeichnet, dass** die Permanentmagnete (4) derart angeordnet sind, dass ihre Nord (N)- und Südpole (S) in Bewegungsrichtung hintereinander angeordnet sind und die Spulen der mehrphasigen Wicklung die Permanentmagnete (4) umgreifen.

2. Linearmotor nach Anspruch 1, **dadurch gekennzeichnet, dass** er eisenlos ausgebildet ist.

3. Linearmotor nach Anspruch 1 oder 2, **dadurch gekennzeichnet, dass** die Spulen der mehrphasigen Wicklung kreuzungsfrei hintereinander angeordnet sind.

4. Linearmotor nach einem der Ansprüche 1 bis 3, **dadurch gekennzeichnet, dass** drei dreiphasig angesteuerte Wicklungsphasen hintereinander angeordnet sind.

5. Linearmotor nach einem der Ansprüche 1 bis 4, **dadurch gekennzeichnet, dass** die mehrphasige Wicklung phasenrein ausgeführt ist und die Maschine als Motor in jeder Position anlaufen kann und im Dauerbetrieb eine nahezu konstantes Drehmoment bzw. eine nahezu konstante Kraft unabhängig von der relativen Lage der Primärspulen zu den Dauermagneten liefern kann.

6. Linearmotor nach einem der Ansprüche 1 bis 5, **dadurch gekennzeichnet, dass** in Bewegungsrichtung (R) gesehen der Querschnitt der Spulen mit den Wicklungen sowie der Permanentmagnete (4) im Wesentlichen rund oder rechteckig ist.

7. Linearmotor nach einem der Ansprüche 1 bis 6, **dadurch gekennzeichnet, dass** der Linearamotor (1) als Normalkraft-Aktor ausgebildet ist und nur ein Sekundärteil, eine Magnetspur, benötigt.

8. Linearmotor nach einem der Ansprüche 1 bis 6, **dadurch gekennzeichnet, dass** der Linearamotor (1) als drehender Servomotor ausgebildet ist.
